# EUROPEAN PATENT SPECIFICATION

(11) **EP 4 009 443 B1**
(45) Date of publication and mention of the grant of the patent: **29.11.2023**
(21) Application number: 21167110.2
(22) Date of filing: 07.04.2021
(51) Int. Cl.: H01Q 21/00, H01Q 25/00, H04B 10/2575, H04B 7/06, H01Q 3/36

(54) **OPTICAL AND ELECTRICAL HYBRID BEAMFORMING TRANSMITTER, RECEIVER, AND SIGNAL PROCESSING METHOD**
OPTISCHER UND ELEKTRISCHER SENDER MIT HYBRIDER STRAHLFORMUNG, EMPFÄNGER UND SIGNALVERARBEITUNGSVERFAHREN
ÉMETTEUR DE FORMATION DE FAISCEAU HYBRIDE OPTIQUE ET ÉLECTRIQUE, RÉCEPTEUR, ET PROCÉDÉ DE TRAITEMENT DE SIGNAL

(30) Priority: 02.12.2020 CN 202011404720
(43) Date of publication of application: 08.06.2022
(73) Proprietor: TMY Technology Inc., Taipei City 106 (TW)
(72) Inventor: Chang, Su-Wei, 106 Taipei City (TW); Chuang, Han-Ti, 106 Taipei City (TW); Tsai, Wen-Tsai, 106 Taipei City (TW); Hung, Tzu-Chieh, 106 Taipei City (TW); Tai, Yang, 106 Taipei City (TW); Hsu, Shao-Chun, 106 Taipei City (TW); Su, Guo-Zhen, 106 Taipei City (TW)
(74) Representative: Becker, Eberhard

(56) References cited:
- WO-A1-2020/078781
- US-A1- 2016 352 407
- US-A1- 2019 229 808
- US-B2- 9 020 362

## Description

### BACKGROUND

### Technical Field

The disclosure relates to a communication technology, and in particular to an optical and electrical hybrid beamforming transmitter, receiver, and signal processing method.

### Description of Related Art

With a rapid development of wireless communication technology, a demand for related application services (such as high definition video or music streaming, movie downloading, virtual reality (VR), etc.) has increased. In order to meet a bandwidth requirement of the services, an antenna array with a high energy gain and directivity has been proposed to increase a signal noise ratio (SNR).

On the other hand, radio frequency band resources are becoming scarce. For example, it is difficult for a microwave frequency band configured in fifth-generation (5G) mobile communications to meet a high-bandwidth requirement. If a system is combined with optical fiber communication, more bandwidth and spectrum resources may be provided. In addition, if the system is further combined with features of an antenna array, an optical antenna array can further increase an antenna gain.

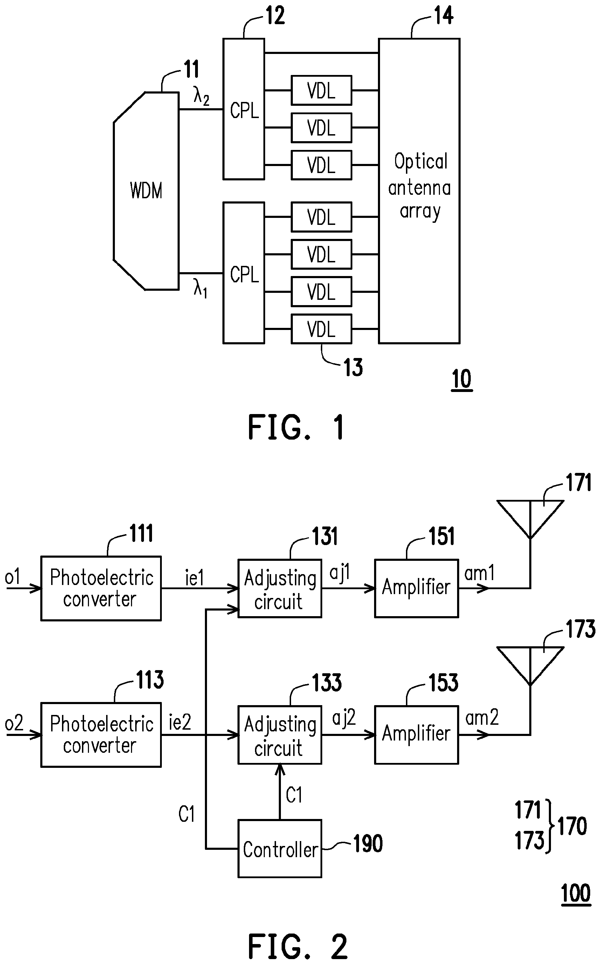

FIG. 1 is a block diagram of elements of a conventional optical array antenna architecture 10. Referring to FIG. 1, the optical array antenna architecture 10 includes a wavelength division multiplexer (WDM) 11, a coupler (CPL) 12, a variable delay line (VDL) 13, and an optical antenna array 14. Different VDLs 13 cause a phase difference to wavelengths of different paths of light, thereby achieving beamforming. However, optical beamforming in actual execution has requirements as follows: wavelengths λ1 and λ2 of a light wave need to be adjusted accurately to achieve an expected phase difference; and true delay is required for phases of two paths/channels to be equal. The above requirements are relatively difficult to execute. US 2019/229808 A1 discloses a method which includes feeding a plurality of antenna elements of an array antenna, which involves receiving at a photonic substrate at least one transmit modulated optical carrier signal. The signal is communicated to an array level photonic integrated circuit disposed on the photonic substrate where one or more optical processing operations are performed involving the signal to obtain a plurality of element-level optical carrier signals. These element-level optical carrier signals are communicated from the array level photonic integrated circuit to a plurality of conversion locations distributed on the photonic substrate.
US 2016/352407 A1 discloses an electronic device comprising an antenna array including antennas arranged along first and second directions, beamforming signals in an analog domain along the first direction of the antenna array and beamforming signals in a digital domain along the second direction of the antenna array. The antenna array includes subsets of antennas, where each subset has a system-on-chip with analog and digital beamforming circuitry.
WO 2020/078781 A1 discloses a communication system comprising a base station, at least one remote radio head, and at least one channel. The base station comprises a at least two digital modulators adapted for modulating a first and a second incoming radio signal to obtain a first and a second quantized signal, a multiplexer for interleaving the quantized signals and a transmitter adapted for transmitting the resulting quantized signal over the channel to the remote radio head. The remote radio head comprises a receiver adapted for capturing the quantized signal, a clock extraction module adapted for converting the signal from the receiver into a clock signal, a demultiplexer for splitting the quantized signal using the clock signal to obtain at least two quantized signals, and a filter.

### SUMMARY

The present invention is provided by the appended claims. The following disclosure serves a better understanding of the present invention. In view of the above, embodiments of the disclosure provide an optical and electrical hybrid beamforming transmitter, receiver, and signal processing method. In the embodiments of the disclosure, a phase of each path may be adjusted.

The optical and electrical hybrid beamforming transmitter of the embodiments of the disclosure includes (but is not limited to) a first photoelectric converter, configured for converting a first optical signal into a first initial electric signal; a first adjusting circuit, coupled to the first photoelectric converter, configured for delaying the first initial electric signal according to an expected beam pattern formed by an antenna array to output a first adjusted electric signal; a second photoelectric converter, configured for converting a second optical signal into a second initial electric signal; a second adjusting circuit, coupled to the second photoelectric converter, configured for delaying the second initial electric signal, according to the beam pattern to output a second adjusted electric signal, wherein the optical and electrical hybrid beamforming transmitter is characterized in that the first adjusting circuit and the second adjusting circuit are calibrated to an initial phase, and are configured to apply a subsequent phase adjustment of the first initial electric signal and the second initial electric signal in response to the calibration to an initial phase; and the antenna array, comprising: a first antenna, coupled to the first adjusting circuit; and a second antenna, coupled to the second adjusting circuit, wherein the antenna array is configured for radiating electromagnetic wave according to the first adjusted electric signal and the second adjusted electric signal.

The optical and electrical hybrid beamforming receiver of the embodiments of the disclosure includes (but is not limited to) an antenna array, comprising:a first antenna, configured for receiving a first received electric signal; and a second antenna, configured for receiving a second received electric signal;a first adjusting circuit, coupled to the first antenna, configured for delaying the first received electric signal according to an expected beam pattern formed by the antenna array to output a first adjusted electric signal;a first electric-to-optic converter, coupled to the first adjusting circuit, configured for converting the first adjusted electric signal into a first optical signal;a second adjusting circuit, coupled to the second antenna, configured for delaying the second received electric signal according to the beam pattern to output a second adjusted electric signal, wherein the optical and electrical hybrid beamforming receiver is characterized in that the first adjusting circuit and the second adjusting circuit are calibrated to an initial phase, and are configured to apply a subsequent phase adjustment of the first received electric signal and the second received electric signal in response to the calibration to an initial phase; and a second electric-to-optic converter, coupled to the second adjusting circuit, configured for converting the second adjusted electric signal into a second optical signal.

The optical and electrical hybrid beamforming signal processing method of the embodiments of the disclosure is adapted for the transmitter, and includes (but is not limited to) the following steps: converting a first optical signal and a second optical signal into a first initial electric signal and a second initial electric signal, respectively;delaying, by a first adjustment circuit, the first initial electric signal and, by a second adjustment circuit, the second initial electric signal, respectively, according to an expected beam pattern formed by an antenna array to output a first adjusted electric signal and a second adjusted electric signal, wherein the optical and electrical hybrid beamforming signal processing method is characterized by comprising: calibrating the first and second adjustment circuits to an initial phase; and applying a subsequent phase adjustment of the first initial electric signal and the second initial electric signal in response to the calibration to an initial phase; and radiating electromagnetic wave through the antenna array according to the first adjusted electric signal and the second adjusted electric signal, wherein the antenna array comprises two antennas corresponding to the first adjusted electric signal and the second adjusted electric signal, respectively.

The optical and electrical hybrid beamforming signal processing method of the embodiments of the disclosure is adapted for the receiver, and includes (but is not limited to) the following steps: receiving a first received electric signal and a second received electric signal through two antennas of an antenna array, respectively; delaying, by a first adjustment circuit, the first received electric signal and, by a second adjustment circuit, the second received electric signal, respectively, according to an expected beam pattern formed by the antenna array to output a first adjusted electric signal and a second adjusted electric signal, wherein the optical and electrical hybrid beamforming signal processing method is characterized by comprising calibrating the first and second adjustment circuits to an initial phase; and applying an subsequent phase adjustment of the first received electric signal and the second received electric signal in response to the calibration to an initial phase; and converting the first adjusted electric signal and the second adjusted electric signal into a first optical signal and a second optical signal, respectively.

Based on the above, in the optical and electrical hybrid beamforming transmitter, receiver, and signal processing method in the embodiments of the disclosure, the photoelectric converter is provided to each antenna of the transmitter, and the electric-to-optic converter is provided to each antenna of the receiver, to adjust the phase of the electric signals (that is, to delay the signals) and enable the phase of the signals of each channel to meet the requirement of the beam pattern of the antenna. Accordingly, different from a conventional architecture, a wavelength division multiplexer (WDM) and variable delay line (VDL) do not need to be set in an architecture of the disclosure, thereby reducing elements. In addition, different from conventional optical beamforming, an optical-electrical hybrid beamforming architecture of the embodiments of the disclosure may be easily adjusted to a specified phase, and a phase calibration is thus completed.

In order to further illustrate the features of the disclosure, embodiments are described in detail as follows in connection with accompanying drawings.

### BRIEF DESCRIPTION OF THE DRAWINGS

FIG. 1 is a block diagram of elements of a conventional optical array antenna architecture.
FIG. 2 is a block diagram of elements of an optical and electrical hybrid beamforming transmitter according to an embodiment of the disclosure.
FIG. 3 is a schematic diagram of an optical and electrical hybrid beamforming transmitter according to another embodiment of the disclosure.
FIG. 4 is a schematic diagram of a light generator according to an embodiment of the disclosure.
FIG. 5A is a schematic diagram of element modularization according to an embodiment of the disclosure.
FIG. 5B is a schematic diagram of element modularization according to another embodiment of the disclosure.
FIG. 6 is a flowchart of an optical and electrical hybrid beamforming signal processing method according to an embodiment of the disclosure.
FIG. 7 is a block diagram of elements of an optical and electrical hybrid beamforming receiver according to an embodiment of the disclosure.
FIG. 8 is a schematic diagram of an optical and electrical hybrid beamforming receiver according to another embodiment of the disclosure.
FIG. 9 is a flowchart of an optical and electrical hybrid beamforming signal processing method according to an embodiment of the disclosure.

### DESCRIPTION OF THE EMBODIMENTS

FIG. 2 is a block diagram of elements of an optical and electrical hybrid beamforming transmitter 100 according to an embodiment of the disclosure. Referring to FIG. 2, a transmitter 100 includes (but is not limited to) photoelectric converters 111 and 113, adjusting circuits 131 and 133, an antenna array 170, and a controller 190.

The photoelectric converters 111 and 113 may be photodiodes (PDs), optical detectors, or other optical sensors that convert light into current or voltage signals. In an embodiment, the photoelectric converters 111 and 113 convert optical signals o1 and o2 into initial electric signals ie1 and ie2, respectively.

The adjusting circuits 131 and 133 are coupled to the photoelectric converters 111 and 113, respectively. The adjusting circuits 131 and 133 may be chips, application specified integrated circuits (ASICs), field programmable gate arrays (FPGAs), microcontrollers, or other types of circuits.

In an embodiment, the adjusting circuits 131 and 133 include phase shifters. The phase shifters are configured to delay the initial electric signals ie1 and ie2 according to an expected beam pattern formed by the antenna array 170 (that is, to adjust a phase). For example, a phase shift is generated by switching transmission lines, loads, or low-and-high-pass filters through a mechanical switch, a relay, a PIN diode, a field effect transistor (FET) or a micro electro mechanical system (MEMS), or other switch elements.

In another embodiment, in addition to the elements for adjusting the phase of an input signal, the adjusting circuits 131 and 133 further include an amplitude attenuator. The amplitude attenuator is configured to adjust an amplitude of the initial electric signals ie1 and ie2 according to the beam pattern.

In some embodiments not according to the claimed invention, the adjusting circuits 131 and 133 may only include amplitude attenuators. That is, phases corresponding to some or all channels in the adjusting circuits 131 and 133 are fixed. In this way, adjusted electric signals aj 1 and aj2 may be output by generating the initial electric signals ie1 and ie2 which have been delayed and/or whose amplitudes have been changed.

The antenna array 170 at least includes two antennas 171 and 173. The antennas 171 and 173 are coupled to the adjusting circuits 131 and 133, respectively. In an embodiment, the antenna array 170 is configured to radiate electromagnetic wave according to the adjusted electric signals aj 1 and aj2.

It is to be noted that by changing a phase and amplitude corresponding to each of the antennas 171 and 173, electromagnetic wave may be superimposed on each other in a specific direction and offset each other in some directions based on constructive and destructive interferences, thereby enabling a far field pattern formed by radiation of the antenna array 170 to be equal to a specific beam pattern (which is related to a field pattern formed by parameters such as a main beam direction, a beam width, a directional gain, a side beam level, etc.).

The controller 190 is coupled to the adjusting circuits 131 and 133. The controller 190 may be a chip, an ASIC, a FPGA, a microcontroller, or other types of circuits. In an embodiment, the controller 190 outputs an adjustment command C1, so that the adjusting circuits 131 and 133 are controlled by the controller 190.

In some embodiments, the transmitter 100 further includes amplifiers 151 and 153. The amplifiers 151 and 153 are coupled to the adjusting circuits 131 and 133. The amplifier 150 includes one or more amplifiers. The amplifier is, for example, a circuit such as a low-noise amplifier or a power amplifier. In an embodiment, the amplifiers 151 and 153 are configured to control a waveform of an output signal to enable the waveform of the output signal to be equal to a waveform of the input signal, but the output signal may have a larger amplitude. In an embodiment, the amplifiers 151 and 153 amplify the adjusted electric signals aj 1 and aj2 to output amplified electric signals am1 and am2, respectively.

In addition, the embodiments of the disclosure may further be applied to an architecture with more channels.

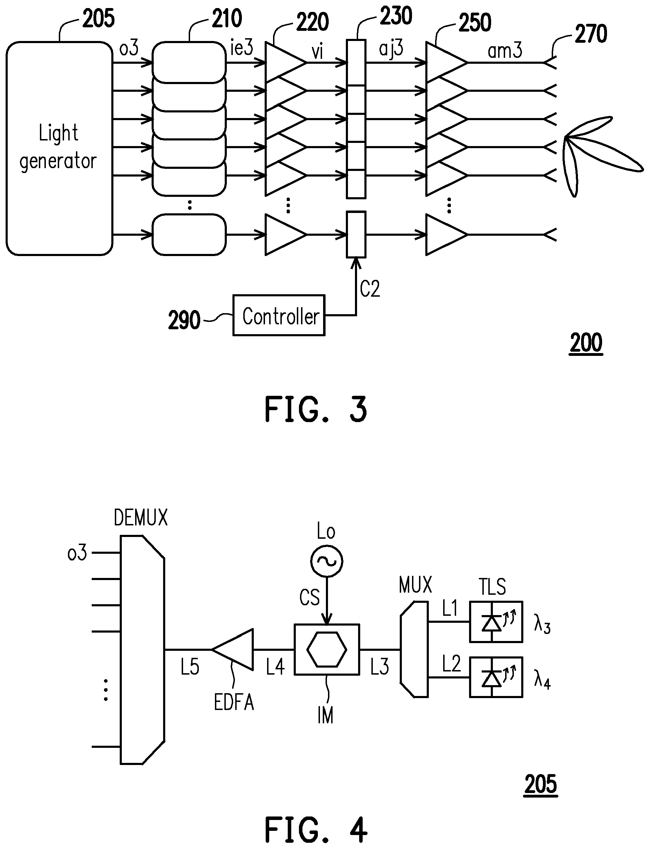

FIG. 3 is a schematic diagram of an optical and electrical hybrid beamforming transmitter 200 according to another embodiment of the disclosure. Referring to FIG. 3, a transmitter 200 includes (but is not limited to) a light generator 205, three or more photoelectric converters 210, three or more transimpedance amplifiers (TIAs) 220, three or more adjusting circuits 230, three or more amplifiers 250, an antenna array 270 (including three or more antennas), and a controller 290. Each channel corresponds to a light generator 205, an photoelectric converter 210, a TIA 220, an adjusting circuit 230, an amplifier 250, and an antenna in the antenna array 270 connected in series.

Implementation forms of the photoelectric converters 210, the adjusting circuits 230, the amplifiers 250, the antenna array 270, and the controller 290 can be found in the descriptions of the photoelectric converters 111 and 113, the adjusting circuits 131 and 133, the amplifiers 151 and 153, the antenna array 170, and the controller 190 in FIG. 1 respectively, and will not be repeated herein.

The light generator 205 is coupled to the photoelectric converters 210. In an embodiment, the light generator 205 is configured to generate multiple optical signals o3. For example, FIG. 4 is a schematic diagram of the light generator 205 according to an embodiment of the disclosure. Referring to FIG. 4, the light generator 205 includes (but is not limited to) tunable light sources TLS, a multiplexer MUX, a modulator IM, a local oscillator LO, an erbium-doped optical fiber amplifier EDFA, and a demultiplexer DEMUX.

The two tunable light source TLSs generate optical signals L1 and L2 according to wavelengths λ3 and λ4, respectively. The demultiplexer MUX combines the two optical signals L1 and L2 with different wavelengths λ3 and λ4 into an optical signal L3. The modulator IM mixes the optical signal L3 according to a reference signal CS provided by the local oscillator LO to output an optical signal L4. The erbium-doped optical fiber amplifier EDFA amplifies the optical signal L4 to output an optical signal L5. The demultiplexer DEMUX demultiplexes the optical signal L5 to form the optical signals o3 on different channels.

It is to be noted that the light generator 205 may further have other implementation forms, and a user can modify the light generator 205 according to needs, and the disclosure is not limited thereto.

In addition, the TIAs 220 are coupled between the photoelectric converters 210 and the adjusting circuits 230. In an embodiment, the TIAs 220 are configured to convert a current signal output by the photoelectric converters 210 into a voltage signal, so that impedance matching when the optical signal is converted to a radio frequency domain may be more efficient.

It is to be noted that the number of the channels of the transmitter 200 may exceed ten groups, such as 16 groups, 32 groups, or 64 groups. However, the embodiments of the disclosure do not limit the number of the channels. In some embodiments, more antennas in the antenna array 270 may facilitate beamforming. For example, a shape of a main beam is relatively narrow and a directional gain of the main beam is relatively large, and an amplitude of a side beam is relatively low, but the disclosure is not limited thereto.

Referring to FIG. 3, the transmitter 200 of the embodiments of the disclosure provides an optical-electric hybrid (also known as radio over fiber (RoF)) beamforming architecture. The light generator 205 and the photoelectric converters 210 form an optical beamforming architecture in an optical domain; the adjusting circuits 230, the amplifiers 250, and the antenna array 270 form an analog beamforming architecture in a radio frequency domain.

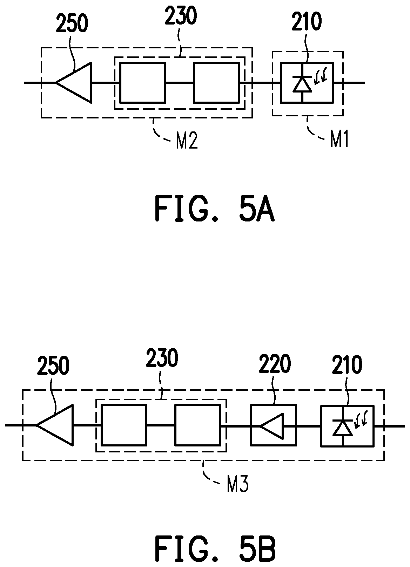

In an embodiment, multiple elements in the transmitter 200 may be packaged together. FIG. 5A is a schematic diagram of element modularization according to an embodiment of the disclosure. Referring to FIG. 5A, taking a path (a channel) as an example, the photoelectric converter 210 may be packaged as a module M1, and the adjusting circuit 230 and the amplifier 250 may be packaged together as a module M2.

FIG. 5B is a schematic diagram of element modularization according to another embodiment of the disclosure. Referring to FIG. 5B, the photoelectric converter 210, the TIA 220, the adjusting circuit 230, and the amplifier 250 may be packaged together as a module M3. With the new packaging forms and the TIA 220 following the photoelectric converter 210, impedance matching may be improved, thereby improving efficiency. In addition, once an overall packaging is completed, loss during a module integration may be reduced, thereby improving an overall performance.

It is to be noted that in FIGS. 5A and 5B, the elements are packaged in a single-channel manner. However, in other embodiments, the elements may be packaged in an array manner (a multi-channel manner) to meet a need of a multi-channel module. That is, two or more photoelectric converters 210, two or more transimpedance amplifiers 220, two or more adjusting circuits 230, and two or more amplifiers 250 are packaged together. For example, a 1×4 (that is, 4-channel), 1×8 (that is, 8-channel), or 1×16 (that is, 16-channel) array is packaged together.

The following is a description of an operation process of the transmitters 100 and 200. For a clear description, the transmitter 200 will be configured as a main body. Descriptions of the same or corresponding elements in the transmitter 100 can be found in the description of the transmitter 200, and will not be repeated herein.

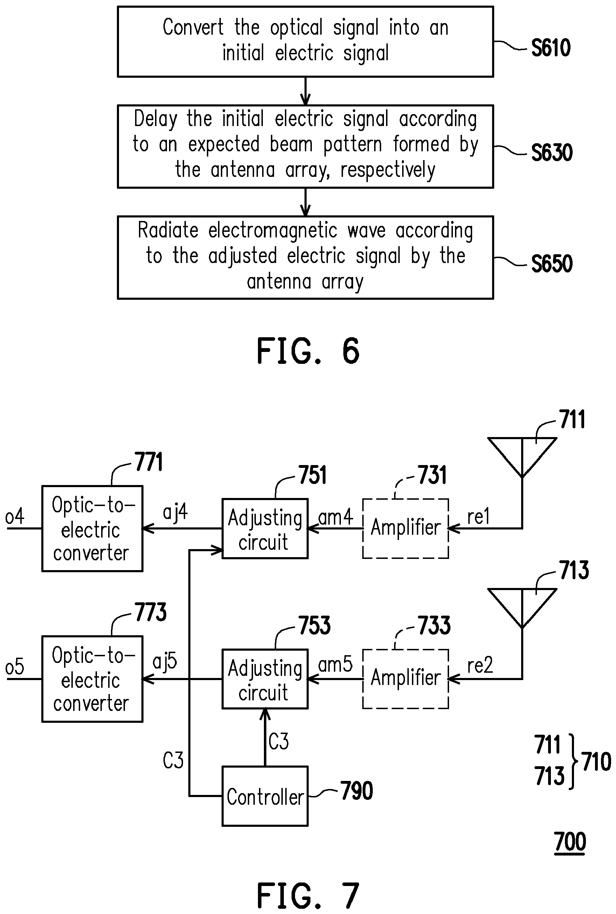

FIG. 6 is a flowchart of an optical and electrical hybrid beamforming signal processing method according to an embodiment of the disclosure. Referring to FIG. 6, each of the photoelectric converters 210 receives an optical signal o3 from the light generator 205, and converts the optical signal o3 into an initial electric signal ie3 (step S610). Each of the photoelectric converters 210 may convert the optical signal o3 into an initial electric signal ie3 in a form of current or voltage. In an embodiment, if the initial electric signal ie3 is in a current form, each of the TIAs 220 may convert the initial electric signal ie3 into a voltage form to generate a voltage signal vi. In another embodiment, if the initial electric signal ie3 is in the voltage form, the TIAs 220 may be omitted.

Each of the adjusting circuits 230 may delay the initial electric signal ie3 according to an expected beam pattern formed by the corresponding antenna array 270, respectively, to output an adjusted electric signal am3 (step S630). Specifically, beamforming formed by radiation of the antennas in the antenna array 270 may have different field patterns due to having different phases or a phase difference with adjacent channels (such as different radiation directions, gains or shapes, and an example of beamforming is on a right-hand side of FIG. 3). In some embodiments, in order to enable the antenna array 270 to achieve a specific direction or gain (that is, an amplitude), a corresponding phase (that is, a delay time) of each channel may be different. Therefore, the adjusting circuits 230 on all or a part of the channels adjust a phase of the initial electric signals ie3 or the voltage signals vi input by the adjusting circuits 230, respectively. Accordingly, the signal may be delayed, so that phases of the adjusted electric signal aj3 on different channels are different, thereby forming a phase difference and achieving beamforming in different directions. In addition, all or a part of the adjusting circuits 230 may also adjust an amplitude of the initial electric signals ie3 or the voltage signals vi input by the adjusting circuits 230, respectively, thereby changing the beam width or gain.

In an embodiment, the controller 290 may set a beam pattern corresponding to the antenna array 270 (that is, expected beamforming to be formed, including a beam direction and a field pattern), and form an adjustment command C2 accordingly. Each of the adjusting circuits 230 may generate the adjusted electric signal aj3 according to the adjustment command C2. In other words, the amplitude and/or the phase of the initial electric signals ie3 or the voltage signals vi are controlled through a command issued by the controller 290 on all or a part of the adjusting circuits 230, thereby adjusting the phase and/or gain.

In some embodiments, the amplitude or the phase of the initial electric signals ie3 or the voltage signals vi of some channels are fixed, and only the amplitude or phase of the initial electric signals ie3 or the voltage signals vi of other part of the channels may be adjusted.

In addition, the same elements on different channels may still cause a phase difference. Therefore, a phase calibration is needed. In another embodiment, the controller 290 may set an initial phase and form another adjustment command C2 related to the calibration accordingly. Each of the adjusting circuits 230 is calibrated to this initial phase according to the adjustment command C2 to enable the initial phases to be consistent. Accordingly, a subsequent phase adjustment of each channel may enable the phases to be accurately adjusted to the specified beam pattern.

In some embodiments, the controller 290 may provide an internal transmission interface (such as a serial peripheral interface (SPI), a universal synchronous asynchronous receiver transmitter (UART), or an I2C, etc.) to connect and control the adjusting circuits 230 accordingly. In addition, an external computing device (such as a personal computer, a notebook computer, or a smartphone, etc.) may connect the controller 290 through an external transmission interface (such as Ethernet, or USB, etc.) and control the controller 290 accordingly. The computing device may provide a window interface to facilitate setting by an operator, and may modify, read, or store data of settings related to the command or the beam field. The calibration data stored in a non-volatile memory is read into the memory by the controller 290 every time the system is restarted, and the controller 290 writes the data into a register of the adjusting circuits 230 through the internal transmission interface to achieve the calibration function. In addition, the computing device may dynamically load a function library to provide software development and calibration automation functions.

It is to be noted that the adjusting circuits 230 in the analog beamforming architecture adjust a phase difference generated in an optical end link to further calibrate a phase matching. After the phase calibration, front-end beamforming is achievable through the analog beamforming architecture. A back-end optical beamforming architecture may realize fine-tuning, thereby allowing overall beamforming to be more efficiently realized and more broadly adjusted.

In an embodiment, each of the amplifiers 250 may amplify the adjusted electric signal aj3 to output the amplified electric signal am3. In other words, an amplitude of the amplified electric signal am3 may exceed an amplitude of the adjusted electric signal aj3.

Next, the antenna array 270 radiates an electromagnetic wave according to the adjusted electric signals aj3 (step S650). It is to be noted that the adjusted electric signals aj3 that assign different phases and/or amplitudes to multiple channels enable the antenna array 270 to form a phased array, thereby strengthening an intensity of the electromagnetic wave in a specified direction and suppressing an intensity of the electromagnetic wave in other directions. Accordingly, a far field pattern of the antenna array 270 may be equal to the expected beam pattern to be formed.

In some embodiments, if the amplifiers 250 are provided, the antenna array 270 may radiate electromagnetic wave according to the amplified electric signals am3.

In addition to a transmitting end, a similar inventive concept may also be applied to a receiving end.

FIG. 7 is a block diagram of elements of an optical and electrical hybrid beamforming receiver 700 according to an embodiment of the disclosure. Referring to FIG. 7, the receiver 700 includes (but is not limited to) an antenna array 710, adjusting circuits 751 and 753, electric-to-optic converters 771 and 773, and a controller 790. In some embodiments, the receiver 700 may further include amplifiers 731 and 733. Implementation forms of the antenna array 710, the amplifiers 731 and 733, adjusting circuits 751 and 753, and the controller 790 can be found in the descriptions of the antenna arrays 170 and 270, the amplifiers 151, 153, and 250, the adjusting circuits 131, 133, and 230, and the controllers 190 and 290 of the transmitters 100 and 200, respectively, and will not be repeated herein.

A main difference between the receiver 700 and the transmitter 100 is that the amplifiers 731 and 733 and the amplifiers 151 and 153 are in opposite directions, respectively, and the adjusting circuits 751 and 753 and the adjusting circuits 131 and 133 are in opposite directions, respectively. In addition, in the receiver 700, the photoelectric converters 111 and 113 are replaced by the electric-to-optic converters 771 and 773.

Specifically, the antenna array 710 includes two antennas 711 and 713. The two antennas 711 and 713 radiate electromagnetic wave and receive two received electric signals re1 and re2.

The amplifiers 731 and 733 are coupled to the two antennas 711 and 713 of the antenna array 710, respectively, and are configured to amplify the received electric signals re1 and re2 to output amplified electric signals am4 and am5.

The adjusting circuits 751 and 753 are coupled to the antennas 711 and 713 or the amplifiers 731 and 733, and are configured to delay the amplified electric signals am4 and am5 or the received electric signals re1 and re2, respectively, according to an expected beam pattern (that is, a specified beam pattern) formed by the antenna array 710, to output adjusted electric signals aj4 and aj5.

In some embodiments, the adjusting circuits 751 and 753 further adjust amplitudes of the amplified electric signals am4 and am5 or the received electric signals re1 and re2 according to the beam pattern.

The electric-to-optic converters 771 and 773 are coupled to the adjusting circuits 751 and 753. The electric-to-optic converters 771 and 773 may be laser diodes (LDs), laser generators, or other generators that convert electrical energy into light energy. In an embodiment, the electric-to-optic converters 771 and 773 are configured to convert the adjusted electric signals aj4 and aj5 into optical signals o4 and o5, respectively.

In addition, in an embodiment, the controller 790 is coupled to the adjusting circuits 751 and 753, and is configured to set a beam pattern corresponding to the antenna array 710 and form an adjustment command C3 accordingly. The adjusting circuits 751 and 753 may generate the adjusted electric signals aj4 and aj5 according to the adjustment command C3.

In another embodiment, regarding phase calibration, the controller 790 may be configured to set an initial phase, and form another adjustment command C3 related to the phase calibration accordingly. The adjusting circuits 751 and 753 may be calibrated to the initial phase according to the adjustment command C3 related to this phase to enable the initial phases to be consistent.

In addition, the embodiments of the disclosure may further be applied to an architecture with more channels.

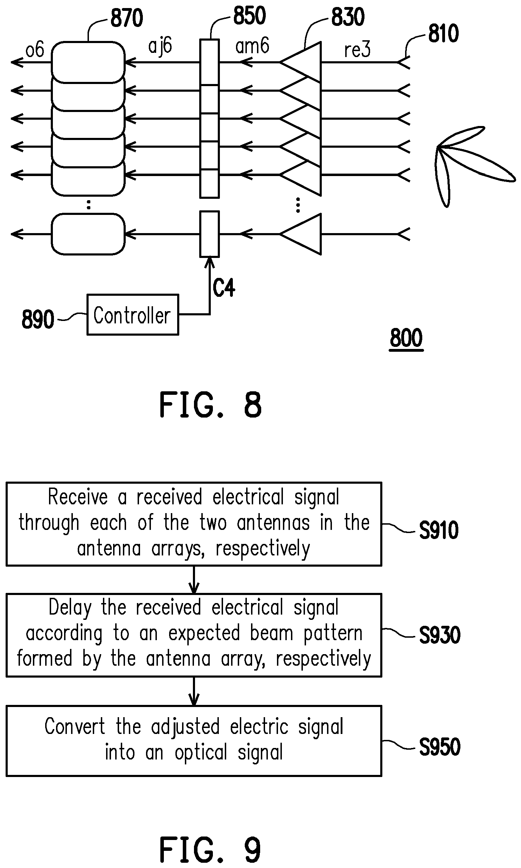

FIG. 8 is a schematic diagram of an optical and electrical hybrid beamforming receiver 800 according to another embodiment of the disclosure. Referring to FIG. 8, a receiver 800 includes (but is not limited to) multiple antenna arrays 810, multiple amplifiers 830, multiple adjusting circuits 850, and multiple electric-to-optic converters 870. Each channel corresponds to an antenna in the antenna arrays 810, an amplifier 830, an adjusting circuit 850 and an electric-to-optic converter 870 connected in series.

The implementation forms of the antenna arrays 810, the amplifiers 830, the adjusting circuits 850 and the electric-to-optic converters 870 can be found in the descriptions of the antenna arrays 710, the amplifiers 731 and 733, the adjusting circuits 751 and 753, and the electric-to-optic converters 771 and 773 in FIG. 7 respectively, and will not be repeated herein.

It is to be noted that the number of the channels of the receiver 800 may exceed ten groups, such as 16 groups, 32 groups, or 64 groups. However, the embodiments of the disclosure do not limit the number of the channels. In some embodiments, more antennas in the antenna array 810 may facilitate beamforming.

Similarly, the receiver 800 of the embodiments of the disclosure provides an optical-electric hybrid (also known as an RoF) beamforming architecture. The electric-to-optic converters 870 form an optical beamforming architecture in an optical domain; the amplifiers 830, the adjusting circuits 850, and the electric-to-optic converters 870 form an analog beamforming architecture in a radio frequency domain.

The following is a description of an operation process of the receivers 700 and 800. For a clear description, the receiver 800 will be configured as a main body. Descriptions of the same or corresponding elements in the receiver 700 can be found in the description of the receiver 800, and will not be repeated herein.

FIG. 9 is a flowchart of an optical and electrical hybrid beamforming signal processing method according to an embodiment of the disclosure. Referring to FIG. 9, each of the antennas in the antenna arrays 810 receive a corresponding received electric signal re3, respectively (step S910).

In an embodiment, each of the amplifiers 830 amplifies the corresponding received electric signal re3 to output a corresponding amplified electric signal am6.

Each of the adjusting circuits 850 delays the corresponding received electric signal re3 according to an expected beam pattern formed by the antenna array 810 to be corresponded to, respectively, to output a corresponding adjusted electric signal aj6 (step S930). Each antenna of the antenna arrays 810 is assigned a different phase delay to compensate for a difference in an arrival time of a wave front of a radio signal. Accordingly, a corresponding received beam pattern may be provided according to a direction of arrival (DoA) of the wave front of the radio signal.

In some embodiments, if the amplifiers 830 are provided, the adjusting circuits 850 may delay the amplified electric signals am6, respectively.

Each of the electric-to-optic converters 870 converts the corresponding adjusted electric signal aj6 into a corresponding optical signal o6 (step S950).

In addition, the controllers 890 may set a beam pattern or an initial phase corresponding to each of the antenna arrays 810, and form an adjustment command C4 accordingly. Accordingly, each of the adjusting circuits 850 may generate the adjusted electric signal aj6 or may be calibrated to the initial phase according to the adjustment command C4.

It is to be noted that details of the steps can be found in the descriptions of FIGS. 2 to 4 and FIG. 7 respectively, and will not be repeated herein. Similarly, specified beamforming may be achieved by performing a phase calibration on the adjusting circuit 850 on each channel and then adjusting a phase and/or an amplitude of the adjusted electric signal aj6 output by the adjusting circuit 850 to a phase and/or an amplitude corresponding to a specified beam pattern.

In summary, in the optical-electrical hybrid beamforming transmitter, receiver, and signal processing method of the embodiments of the disclosure, the optical-electrical hybrid beamforming architecture is realized through the transmitter and the receiver. The phase of each of the electric signals is adjusted, and the phase of each of the signals of each channel is designed to meet the requirement of the beam pattern of the antenna arrays. In addition, a specified phase difference may be accurately formed on multiple channels, and beamforming may be achieved. Different from a conventional architecture, a wavelength division multiplexer (WDM) and a variable delay line (VDL) do not need to be disposed in the optical-electrical hybrid beamforming architecture of the embodiments of the disclosure, thereby reducing elements. In addition, the optical-electric hybrid beamforming architecture of the disclosure may be easily adjusted to a specified phase, and the phase calibration is thus completed.

## Claims

1. An optical and electrical hybrid beamforming transmitter (100, 200), comprising:
a first photoelectric converter (111, 113, 210), configured for converting a first optical signal (o1, o2, o3, o4, o5, o6) into a first initial electric signal (iel, ie2, ie3);
a first adjusting circuit (131, 133, 230, 751, 753, 850), coupled to the first photoelectric converter (111, 113, 210), configured for delaying the first initial electric signal (iel, ie2, ie3) according to an expected beam pattern formed by an antenna array (170, 270, 710, 810) to output a first adjusted electric signal (aj1, aj2, aj3, aj4, aj5, aj6);
a second photoelectric converter (111, 113, 210), configured for converting a second optical signal (o1, o2, o3, o4, o5, o6) into a second initial electric signal (iel, ie2, ie3);
a second adjusting circuit (131, 133, 230, 751, 753, 850), coupled to the second photoelectric converter (111, 113, 210), configured for delaying the second initial electric signal (ie1, ie2, ie3) according to the beam pattern to output a second adjusted electric signal (aj1, aj2, aj3, aj4, aj5, aj6), wherein the optical and electrical hybrid beamforming transmitter (100, 200) is **characterized in that** the first adjusting circuit (131, 133, 230, 751, 753, 850) and the second adjusting circuit (131, 133, 230, 751, 753, 850) are calibrated to an initial phase, and are configured to apply a subsequent phase adjustment of the first initial electric signal (iel, ie2, ie3) and the second initial electric signal (iel, ie2, ie3) in response to the calibration to an initial phase; and
the antenna array (170, 270, 710, 810), comprising:
a first antenna (171, 173, 711, 713), coupled to the first adjusting circuit (131, 133, 230, 751, 753, 850); and
a second antenna (171, 173, 711, 713), coupled to the second adjusting circuit (131, 133, 230, 751, 753, 850), wherein the antenna array (170, 270, 710, 810) is configured for radiating electromagnetic wave according to the first adjusted electric signal (aj1, aj2, aj3, aj4, aj5, aj6) and the second adjusted electric signal (aj 1, aj2, aj3, aj4, aj5, aj6).

2. The optical and electrical hybrid beamforming transmitter (100, 200) according to claim 1, wherein
the first adjusting circuit (131, 133, 230, 751, 753, 850) is further configured for adjusting an amplitude of the first initial electric signal (iel, ie2, ie3) according to the beam pattern.

3. The optical and electrical hybrid beamforming transmitter (100, 200) according to claim 1, further comprising:
an amplifier (150, 151, 153, 250, 731, 733, 830), coupled to the first adjusting circuit (131, 133, 230, 751, 753, 850) and the first antenna (171, 173, 711, 713), configured for amplifying the first adjusted electric signal (aj 1, aj2, aj3, aj4, aj5, aj6) to output an amplified electric signal (am1, am2, am3, am4, am5, am6), wherein the first antenna (171, 173, 711, 713) is configured for radiating according to the amplified electric signal (am1, am2, am3, am4, am5, am6).

4. The optical and electrical hybrid beamforming transmitter (100, 200) according to claim 1, wherein a phase of the first adjusted electric signal (aj1, aj2, aj3, aj4, aj5, aj6) and a phase of the second adjusted electric signal (aj1, aj2, aj3, aj4, aj5, aj6) are different.

5. The optical and electrical hybrid beamforming transmitter (100, 200) according to claim 1, further comprising:
a controller (190, 290, 790, 890), coupled to the first adjusting circuit (131, 133, 230, 751, 753, 850) and the second adjusting circuit (131, 133, 230, 751, 753, 850), configured for setting the expected beam pattern formed by the antenna array (170, 270, 710, 810) and for forming an adjustment command (C1, C2, C3, C4) accordingly, wherein
the first adjusting circuit (131, 133, 230, 751, 753, 850) and the second adjusting circuit (131, 133, 230, 751, 753, 850) are configured for generating the first adjusted electric signal (aj1, aj2, aj3, aj4, aj5, aj6) and the second adjusted electric signal (aj1, aj2, aj3, aj4, aj5, aj6), respectively, according to the adjustment command (C1, C2, C3, C4).

6. The optical and electrical hybrid beamforming transmitter (100, 200) according to claim 1, further comprising:
a controller (190, 290, 790, 890), coupled to the first adjusting circuit (131, 133, 230, 751, 753, 850) and the second adjusting circuit (131, 133, 230, 751, 753, 850), configured for setting the initial phase and forming a further adjustment command (C1, C2, C3, C4) accordingly, wherein
the first adjusting circuit (131, 133, 230, 751, 753, 850) and the second adjusting circuit (131, 133, 230, 751, 753, 850) are calibrated to the initial phase according to the further adjustment command (C1, C2, C3, C4).

7. The optical and electrical hybrid beamforming transmitter (100, 200) according to claim 3, further comprising:
a transimpedance amplifier (TIA) (220), coupled between the first photoelectric converter (111, 113, 210) and the first adjusting circuit (131, 133, 230, 751, 753, 850), wherein the first photoelectric converter (111, 113, 210), the TIA (220), the first adjusting circuit (131, 133, 230, 751, 753, 850), and the amplifier (150, 151, 153, 250, 731, 733, 830) are packaged together.

8. An optical and electrical hybrid beamforming receiver (700, 800), comprising:
an antenna array (170, 270, 710, 810), comprising:
a first antenna (171, 173, 711, 713), configured for receiving a first received electric signal (rel, re2, re3); and
a second antenna (171, 173, 711, 713), configured for receiving a second received electric signal (rel, re2, re3);
a first adjusting circuit (131, 133, 230, 751, 753, 850), coupled to the first antenna (171, 173, 711, 713), configured for delaying the first received electric signal (rel, re2, re3) according to an expected beam pattern formed by the antenna array (170, 270, 710, 810) to output a first adjusted electric signal (aj 1, aj2, aj3, aj4, aj5, aj6);
a first electric-to-optic converter (771, 773, 870), coupled to the first adjusting circuit (131, 133, 230, 751, 753, 850), configured for converting the first adjusted electric signal (aj1, aj2, aj3, aj4, aj5, aj6) into a first optical signal (L1, L2, L3, L4, L5);
a second adjusting circuit (131, 133, 230, 751, 753, 850), coupled to the second antenna (171, 173, 711, 713), configured for delaying the second received electric signal (rel, re2, re3) according to the beam pattern to output a second adjusted electric signal (aj1, aj2, aj3, aj4, aj5, aj6), wherein
the optical and electrical hybrid beanforming receiver (700, 800) is **characterized in that** the first adjusting circuit (131, 133, 230, 751, 753, 850) and the second adjusting circuit (131, 133, 230, 751, 753, 850) are calibrated to an initial phase, and are configured to apply a subsequent phase adjustment of the first received electric signal (rel, re2, re3) and the second received electric signal (rel, re2, re3) in response to the calibration to an initial phase; and
a second electric-to-optic converter (771, 773, 870), coupled to the second adjusting circuit (131, 133, 230, 751, 753, 850), configured for converting the second adjusted electric signal (aj1, aj2, aj3, aj4, aj5, aj6) into a second optical signal (L1, L2, L3, L4, L5).

9. The optical and electrical hybrid beamforming receiver (700, 800) according to claim 8, wherein the first adjusting circuit (131, 133, 230, 751, 753, 850) is further configured to adjust an amplitude of the first received electric signal (rel, re2, re3) according to the beam pattern.

10. The optical and electrical hybrid beamforming receiver (700, 800) according to claim 8, further comprising:
an amplifier (150, 151, 153, 250, 731, 733, 830), coupled to the first antenna (171, 173, 711, 713) and the first adjusting circuit (131, 133, 230, 751, 753, 850), configured for amplifying the first received electric signal (rel, re2, re3) to output an amplified electric signal (am1, am2, am3, am4, am5, am6), wherein the first adjusting circuit (131, 133, 230, 751, 753, 850) is configured for delaying the amplified electric signal (am1, am2, am3, am4, am5, am6).

11. The optical and electrical hybrid beamforming receiver (700, 800) according to claim 8, wherein a phase of the first adjusted electric signal (aj1, aj2, aj3, aj4, aj5, aj6) and a phase of the second adjusted electric signal (aj 1, aj2, aj3, aj4, aj5, aj6) are different.

12. The optical and electrical hybrid beamforming receiver (700, 800) according to claim 8, further comprising:
a controller (190, 290, 790, 890), coupled to the first adjusting circuit (131, 133, 230, 751, 753, 850) and the second adjusting circuit (131, 133, 230, 751, 753, 850), configured for setting the expected beam pattern formed by the antenna array (170, 270, 710, 810) and for forming an adjustment command (C1, C2, C3, C4) accordingly, wherein
the first adjusting circuit (131, 133, 230, 751, 753, 850) and the second adjusting circuit (131, 133, 230, 751, 753, 850) are configured for generating the first adjusted electric signal (aj1, aj2, aj3, aj4, aj5, aj6) and the second adjusted electric signal (aj 1, aj2, aj3, aj4, aj5, aj6), respectively, according to the adjustment command (C1, C2, C3, C4).

13. The optical and electrical hybrid beamforming receiver (700, 800) according to claim 9, further comprising:
a controller (190, 290, 790, 890), coupled to the first adjusting circuit (131, 133, 230, 751, 753, 850) and the second adjusting circuit (131, 133, 230, 751, 753, 850), configured for setting the initial phase and for forming a further adjustment command (C1, C2, C3, C4) accordingly, wherein
the first adjusting circuit (131, 133, 230, 751, 753, 850) and the second adjusting circuit (131, 133, 230, 751, 753, 850) are calibrated to the initial phase according to the further adjustment command (C1, C2, C3, C4).

14. An optical and electrical hybrid beamforming signal processing method, adapted for a transmitter (100, 200), comprising:
converting a first optical signal (o1, o2, o3, o4, o5, o6) and a second optical signal (o1, o2, o3, o4, o5, o6) into a first initial electric signal (iel, ie2, ie3) and a second initial electric signal (iel, ie2, ie3), respectively;
delaying, by a first adjustment circuit, the first initial electric signal (iel, ie2, ie3) and by a second adjustment circuit, the second initial electric signal (iel, ie2, ie3), respectively, according to an expected beam pattern formed by an antenna array (170, 270, 710, 810) to output a first adjusted electric signal (aj 1, aj2, aj3, aj4, aj5, aj6) and a second adjusted electric signal (aj1, aj2, aj3, aj4, aj5, aj6), wherein the optical and electrical hybrid beamforming signal processing method is **characterized by** comprising:
calibrating the first and second adjustment circuits to an initial phase; and
applying a subsequent phase adjustment of the first initial electric signal (iel, ie2, ie3) and the second initial electric signal (iel, ie2, ie3) in response to the calibration of an initial phase and radiating electromagnetic wave through the antenna array (170, 270, 710, 810) according to the first adjusted electric signal (aj1, aj2, aj3, aj4, aj5, aj6) and the second adjusted electric signal (aj1, aj2, aj3, aj4, aj5, aj6), wherein the antenna array (170, 270, 710, 810) comprises two antennas (171, 173, 711, 713) corresponding to the first adjusted electric signal (aj1, aj2, aj3, aj4, aj5, aj6) and the second adjusted electric signal (aj1, aj2, aj3, aj4, aj5, aj6), respectively.

15. An optical and electrical hybrid beamforming signal processing method, adapted for a receiver (700, 800), comprising:
receiving a first received electric signal (rel, re2, re3) and a second received electric signal (re1, re2, re3) through two antennas (171, 173, 711, 713) of an antenna array (170, 270, 710, 810), respectively;
delaying, by a first adjustment circuit, the first received electric signal (rel, re2, re3) and, by a second adjustment circuit, the second received electric signal (rel, re2, re3), respectively, according to an expected beam pattern formed by the antenna array (170, 270, 710, 810) to output a first adjusted electric signal (aj1, aj2, aj3, aj4, aj5, aj6) and a second adjusted electric signal (aj1, aj2, aj3, aj4, aj5, aj6), wherein the optical and electrical hybrid beamforming signal processing method is **characterized by** comprising:
calibrating the first and second adjustment circuits to an initial phase; and
applying an subsequent phase adjustment of the first received electric signal (rel, re2, re3) and the second received electric signal (rel, re2, re3) in response to the calibration to an initial phase; and
converting the first adjusted electric signal (aj 1, aj2, aj3, aj4, aj5, aj6) and the second adjusted electric signal (aj1, aj2, aj3, aj4, aj5, aj6) into a first optical signal (L1, L2, L3, L4, L5) and a second optical signal (L1, L2, L3, L4, L5), respectively.

## Patentansprüche

1. Optischer und elektrischer hybrider Strahlformungssender (100, 200), umfassend:
einen ersten photoelektrischen Wandler (111, 113, 210), der konfiguriert ist, um ein erstes optisches Signal (o1, o2, o3, o4, o5, o6) in ein erstes elektrisches Ausgangssignal (iel, ie2, ie3) umzuwandeln;
eine erste Anpassungsschaltung (131, 133, 230, 751, 753, 850), die mit dem ersten photoelektrischen Wandler (111, 113, 210) gekoppelt ist, konfiguriert ist, um das erste elektrische Ausgangssignal (iel, ie2, ie3) entsprechend einem erwarteten Strahlmuster zu verzögern, das von einem Antennenarray (170, 270, 710, 810) gebildet wird, um ein erstes angepasstes elektrisches Signal (aj1, aj2, aj3, aj4, aj5, aj6) auszugeben;
einen zweiten photoelektrischen Wandler (111, 113, 210), der konfiguriert ist, um ein zweites optisches Signal (o1, o2, o3, o4, o5, o6) in ein zweites elektrisches Ausgangssignal (iel, ie2, ie3) umzuwandeln;
eine zweite Anpassungsschaltung (131, 133, 230, 751, 753, 850), die mit dem zweiten photoelektrischen Wandler (111, 113, 210) gekoppelt ist, konfiguriert ist, um das zweite elektrische Ausgangssignal (iel, ie2, ie3) entsprechend dem Strahlmuster zu verzögern, um ein zweites angepasstes elektrisches Signal (aj1, aj2, aj3, aj4, aj5, aj6) auszugeben, wobei der optische und elektrische hybride Strahlformungssender (100, 200) **dadurch gekennzeichnet ist, dass** die erste Anpassungsschaltung (131, 133, 230, 751, 753, 850) und die zweite Anpassungsschaltung (131, 133, 230, 751, 753, 850) auf eine Anfangsphase kalibriert sind, und konfiguriert sind, um eine nachfolgende Phasenanpassung des ersten elektrischen Ausgangssignals (iel, ie2, ie3) und des zweiten elektrischen Ausgangssignals (iel, ie2, ie3) als Reaktion auf die Kalibrierung einer Anfangsphase anzuwenden; und
das Antennenarray (170, 270, 710, 810), umfasst:
eine erste Antenne (171, 173, 711, 713), die mit der ersten Anpassungschaltung (131, 133, 230, 751, 753, 850) gekoppelt ist; und
eine zweite Antenne (171, 173, 711, 713), die mit der zweiten Anpassungsschaltung (131, 133, 230, 751, 753, 850) gekoppelt ist, wobei das Antennenarray (170, 270, 710, 810) konfiguriert ist, um elektromagnetische Wellen entsprechend dem ersten angepassten elektrischen Signal (aj 1, aj2, aj3, aj4, aj5, aj6) und dem zweiten angepassten elektrischen Signal (aj1, aj2, aj3, aj4, aj5, aj6) zu strahlen.

2. Optischer und elektrischer hybrider Strahlformungssender (100, 200) gemäß Anspruch 1, wobei
die erste Anpassungsschaltung (131, 133, 230, 751, 753, 850) ferner konfiguriert ist, um eine Amplitude des ersten elektrischen Ausgangssignals (iel, ie2, ie3) entsprechend dem Strahlmuster anzupassen.

3. Optischer und elektrischer hybrider Strahlformungssender (100, 200) gemäß Anspruch 1, ferner umfassend:
einen Verstärker (150, 151, 153, 250, 731, 733, 830), der mit der ersten Anpassungsschaltung (131, 133, 230, 751, 753, 850) und der ersten Antenne (171, 173, 711, 713) gekoppelt ist, konfiguriert ist, um das erste angepasste elektrische Signal (aj1, aj2, aj3, aj1, aj2, aj3, aj4, aj5, aj6) zu verstärken, um ein verstärktes elektrisches Signal (am1, am2, am3, am4, am5, am6) auszugeben, wobei die erste Antenne (171, 173, 711, 713) konfiguriert ist, um entsprechend dem verstärkten elektrischen Signal (am1, am2, am3, am4, am5, am6) zu strahlen.

4. Optischer und elektrischer hybrider Strahlformungssender (100, 200) gemäß Anspruch 1, wobei eine Phase des ersten angepassten elektrischen Signals (aj1, aj2, aj3, aj4, aj5, aj6) und eine Phase des zweiten angepassten elektrischen Signals (aj1, aj2, aj3, aj4, aj5, aj6) unterschiedlich sind.

5. Optischer und elektrischer hybrider Strahlformungssender (100, 200) gemäß Anspruch 1, ferner umfassend:
eine Steuerung (190, 290, 790, 890), die mit der ersten Anpassungsschaltung (131, 133, 230, 751, 753, 850) und der zweiten Anpassungsschaltung (131, 133, 230, 751, 753, 850) gekoppelt ist, konfiguriert ist, um das erwartete Strahlmuster einzustellen, das von dem Antennenarray (170, 270, 710, 810) gebildet wird und um entsprechend einen Anpassungsbefehl (C1, C2, C3, C4) zu bilden, wobei
die erste Anpassungsschaltung (131, 133, 230, 751, 753, 850) und die zweite Anpassungsschaltung (131, 133, 230, 751, 753, 850) konfiguriert sind, um das erste angepasste elektrische Signal (aj1, aj2, aj3, aj4, aj5, aj6) bzw. das zweite angepasste elektrische Signal (aj1, aj2, aj3, aj4, aj5, aj6) entsprechend dem Anpassungsbefehl (C1, C2, C3, C4) zu erzeugen.

6. Optischer und elektrischer hybrider Strahlformungssender (100, 200) gemäß Anspruch 1, ferner umfassend
eine Steuerung (190, 290, 790, 890), die mit der ersten Anpassungsschaltung (131, 133, 230, 751, 753, 850) und der zweiten Anpassungschaltung (131, 133, 230, 751, 753, 850) gekoppelt ist, konfiguriert ist, um die Anfangsphase einzustellen und entsprechend einen weiteren Anpassungsbefehl (C1, C2, C3, C4) zu bilden, wobei
die erste Anpassungsschaltung (131, 133, 230, 751, 753, 850) und die zweite Anpassungsschaltung (131, 133, 230, 751, 753, 850) gemäß dem weiteren Anpassungsbefehl (C 1, C2, C3, C4) auf die Anfangsphase kalibriert werden.

7. Optischer und elektrischer hybrider Strahlformungssender (100, 200) gemäß Anspruch 3, ferner umfassend
einen Transimpedanzverstärker (TIA) (220), der zwischen dem ersten photoelektrischen Wandler (111, 113, 210) und der ersten Anpassungsschaltung (131, 133, 230, 751, 753, 850) gekoppelt ist, wobei der erste photoelektrische Wandler (111, 113, 210), der TIA (220), die erste Anpassungsschaltung (131, 133, 230, 751, 753, 850) und der Verstärker (150, 151, 153, 250, 731, 733, 830) zusammen verpackt sind.

8. Optischer und elektrischer hybrider Strahlformungsempfänger (700, 800), der umfasst:
ein Antennenarray (170, 270, 710, 810), umfassend:
eine erste Antenne (171, 173, 711, 713), die konfiguriert ist, um ein erstes empfangenes elektrisches Signal (rel, re2, re3) zu empfangen; und
eine zweite Antenne (171, 173, 711, 713), die konfiguriert ist, um ein zweites empfangenes elektrisches Signal (rel, re2, re3) zu empfangen;
eine erste Anpassungsschaltung (131, 133, 230, 751, 753, 850), die mit der ersten Antenne (171, 173, 711, 713) gekoppelt ist, konfiguriert ist, um das erste empfangene elektrische Signal (rel, re2, re3) entsprechend einem erwarteten Strahlmuster zu verzögern, das von dem Antennenarray (170, 270, 710, 810) gebildet wird, um ein erstes angepasstes elektrisches Signal (aj1, aj2, aj3, aj4, aj5, aj6) auszugeben;
einen ersten elektrisch-optischen Wandler (771, 773, 870), der mit der ersten Anpassungsschaltung (131, 133, 230, 751, 753, 850) gekoppelt ist, konfiguriert ist, um das erste eingestellte elektrische Signal (aj1, aj2, aj3, aj4, aj5, aj6) in ein erstes optisches Signal (L1, L2, L3, L4, L5) umzuwandeln;
eine zweite Anpassungsschaltung (131, 133, 230, 751, 753, 850), die mit der zweiten Antenne (171, 173, 711, 713) gekoppelt ist, konfiguriert ist, um das zweite empfangene elektrische Signal (rel, re2, re3) entsprechend dem Strahlmuster zu verzögern, um ein zweites angepasstes elektrisches Signal (aj1, aj2, aj3, aj4, aj5, aj6) auszugeben, wobei der optische und elektrische hybride Strahlformungsempfänger (700, 800) **dadurch gekennzeichnet ist, dass** die erste Anpassungsschaltung (131, 133, 230, 751, 753, 850) und die zweite Anpassungsschaltung (131, 133, 230, 751, 753, 850) auf eine Anfangsphase kalibriert sind, und konfiguriert sind, um eine nachfolgende Phasenanpassung des ersten empfangenen elektrischen Signals (rel, re2, re3) und des zweiten empfangenen elektrischen Signals (rel, re2, re3) in Reaktion auf die Kalibrierung einer Anfangsphase anzuwenden; und
einen zweiten elektrisch-optischen Wandler (771, 773, 870), der mit der zweiten Anpassungsschaltung (131, 133, 230, 751, 753, 850) gekoppelt ist, konfiguriert ist, um das zweite angepasste elektrische Signal (aj1, aj2, aj3, aj4, aj5, aj6) in ein zweites optisches Signal (L1, L2, L3, L4, L5) umzuwandeln.

9. Optischer und elektrischer hybrider Strahlformungsempfänger (700, 800) gemäß Anspruch 8, wobei die erste Anpassungsschaltung (131, 133, 230, 751, 753, 850) ferner konfiguriert ist, um eine Amplitude des ersten empfangenen elektrischen Signals (rel, re2, re3) entsprechend dem Strahlmuster anzupassen.

10. Optischer und elektrischer hybrider Strahlformungsempfänger (700, 800) gemäß Anspruch 8, der ferner umfasst:
einen Verstärker (150, 151, 153, 250, 731, 733, 830), der mit der ersten Antenne (171, 173, 711, 713) und der ersten Anpassungsschaltung (131, 133, 230, 751, 753, 850) gekoppelt ist, konfiguriert ist, um das erste empfangene elektrische Signal (rel, re2, re3) zu verstärken, um ein verstärktes elektrisches Signal (am1, am2, am3, am4, am5, am6) auszugeben, wobei die erste Anpassungsschaltung (131, 133, 230, 751, 753, 850) konfiguriert ist, um das verstärkte elektrische Signal (am1, am2, am3, am4, am5, am6) zu verzögern.

11. Optischer und elektrischer hybrider Strahlformungsempfänger (700, 800) gemäß Anspruch 8, wobei eine Phase des ersten angepassten elektrischen Signals (aj1, aj2, aj3, aj4, aj5, aj6) und eine Phase des zweiten angepassten elektrischen Signals (aj1, aj2, aj3, aj4, aj5, aj6) unterschiedlich sind.

12. Optischer und elektrischer hybrider Strahlformungsempfänger (700, 800) gemäß Anspruch 8, ferner umfassend
eine Steuerung (190, 290, 790, 890), die mit der ersten Anpassungsschaltung (131, 133, 230, 751, 753, 850) und der zweiten Anpassungsschaltung (131, 133, 230, 751, 753, 850) gekoppelt ist, konfiguriert ist, um das erwartete Strahlmuster, das von dem Antennenarray (170, 270, 710, 810) gebildet ist, einzustellen, und um entsprechend einen Anpassungsbefehl (C1, C2, C3, C4) zu bilden, wobei
die erste Anpassungsschaltung (131, 133, 230, 751, 753, 850) und die zweite Anpassungsschaltung (131, 133, 230, 751, 753, 850) konfiguriert sind, um das erste angepasste elektrische Signal (aj 1, aj2, aj3, aj4, aj5, aj6) bzw. das zweite angepasste elektrische Signal (aj1, aj2, aj3, aj4, aj5, aj6) entsprechend dem Anpassungsbefehl (C1, C2, C3, C4) zu erzeugen.

13. Optischer und elektrischer hybrider Strahlformungsempfänger (700, 800) gemäß Anspruch 9, ferner umfassend:
eine Steuerung (190, 290, 790, 890), die mit der ersten Anpassungsschaltung (131, 133, 230, 751, 753, 850) und der zweiten Anpassungsschaltung (131, 133, 230, 751, 753, 850) gekoppelt ist, konfiguriert ist, um die Anfangsphase einzustellen und um entsprechend einen weiteren Anpassungsbefehl (C1, C2, C3, C4) zu bilden, wobei
die erste Anpassungsschaltung (131, 133, 230, 751, 753, 850) und die zweite Anpassungsschaltung (131, 133, 230, 751, 753, 850) entsprechend dem weiteren Anpassungsbefehl (C1, C2, C3, C4) auf die Anfangsphase kalibriert sind.

14. Optisches und elektrisches hybrides Strahlformungs-Signalverarbeitungsverfahren, das für einen Sender (100, 200) angepasst ist, umfassend:
Umwandeln eines ersten optischen Signals (o1, o2, o3, o4, o5, o6) und eines zweiten optischen Signals (o1, o2, o3, o4, o5, o6) in ein erstes elektrisches Anfangssignal (iel, ie2, ie3) bzw. ein zweites elektrisches Anfangssignal (iel, ie2, ie3);
Verzögern des ersten elektrischen Anfangssignals (iel, ie2, ie3), durch eine erste Anpassungsschaltung, bzw. des zweiten anfänglichen elektrischen Signals (iel, ie2, ie3), durch eine zweite Anpassungsschaltung, gemäß einem erwarteten Strahlmuster, das durch ein Antennenarray (170, 270, 710, 810) gebildet wird, um ein erstes angepasstes elektrisches Signal (aj1, aj2, aj3, aj4, aj5, aj6) und ein zweites angepasstes elektrisches Signal (aj1, aj2, aj3, aj4, aj5, aj6) auszugeben, wobei das optische und elektrische hybride Strahlformungs-Signalverarbeitungsverfahren **dadurch gekennzeichnet ist, dass** es umfasst:
Kalibrieren der ersten und der zweiten Anpassungsschaltung auf eine Anfangsphase; und
Anwenden einer nachfolgenden Phasenanpassung des ersten elektrischen Anfangssignals (iel, ie2, ie3) und des zweiten elektrischen Anfangssignals (iel, ie2, ie3) in Reaktion auf die Kalibrierung einer Anfangsphase; und
Strahlen einer elektromagnetischen Welle durch das Antennenarray (170, 270, 710, 810) entsprechend dem ersten eingestellten elektrischen Signal (aj1, aj2, aj3, aj4, aj5, aj6) und dem zweiten eingestellten elektrischen Signal (aj1, aj2, aj3, aj4, aj5, aj6), wobei das Antennenarray (170, 270, 710, 810) zwei Antennen (171, 173, 711, 713) umfasst, die dem ersten angepassten elektrischen Signal (aj1, aj2, aj3, aj4, aj5, aj6) bzw. dem zweiten angepassten elektrischen Signal (aj1, aj2, aj3, aj4, aj5, aj6) entsprechen.

15. Optisches und elektrisches hybrides Strahlformungs-Signalverarbeitungsverfahren, das für einen Empfänger (700, 800) angepasst ist, umfassend:
Empfangen eines ersten empfangenen elektrischen Signals (rel, re2, re3) und eines zweiten empfangenen elektrischen Signals (rel, re2, re3) über zwei Antennen (171, 173, 711, 713) eines Antennenarrays (170, 270, 710, 810);
Verzögern des ersten empfangenen elektrischen Signals (rel, re2, re3), durch eine erste Anpassungsschaltung, bzw. des zweiten empfangenen elektrischen Signals (rel, re2, re3), durch eine zweite Anpassungsschaltung, entsprechend einem erwarteten Strahlmuster, das durch das Antennenarray (170, 270, 710, 810) gebildet wird, um ein erstes angepasstes elektrisches Signal (aj1, aj2, aj3, aj4, aj5, aj6) und ein zweites angepasstes elektrisches Signal (aj1, aj2, aj3, aj4, aj5, aj6) auszugeben, wobei das optische und elektrische hybride Strahlformungs-Signalverarbeitungsverfahren **dadurch gekennzeichnet ist, dass** es umfasst:
Kalibrieren der ersten und der zweiten Anpassungsschaltung auf eine Anfangsphase; und
Anwenden einer nachfolgenden Phasenanpassung des ersten empfangenen elektrischen Signals (rel, re2, re3) und des zweiten empfangenen elektrischen Signals (re1, re2, re3) in Reaktion auf die Kalibrierung einer Anfangsphase; und
Umwandeln des ersten angepassten elektrischen Signals (aj1, aj2, aj3, aj4, aj5, aj6) und des zweiten angepassten elektrischen Signals (aj1, aj2, aj3, aj4, aj5, aj6) in ein erstes optisches Signal (L1, L2, L3, L4, L5) bzw. ein zweites optisches Signal (L1, L2, L3, L4, L5).

## Revendications

1. Emetteur de formation de faisceau hybride optique et électrique (100, 200), comprenant :
un premier convertisseur photoélectrique (111, 113, 210), configuré pour convertir un premier signal optique (o1, o2, o3, o4, o5, o6) en un premier signal électrique initial (iel, ie2, ie3) ;
un premier circuit d'ajustement (131, 133, 230, 751, 753, 850), couplé au premier convertisseur photoélectrique (111, 113, 210), configuré pour retarder le premier signal électrique initial (iel, ie2, ie3) selon un motif de faisceau attendu formé par un réseau d'antennes (170, 270, 710, 810) pour délivrer un premier signal électrique ajusté (aj1, aj2, aj3, aj4, aj5, aj6) ;
un deuxième convertisseur photoélectrique (111, 113, 210), configuré pour convertir un deuxième signal optique (o1, o2, o3, o4, o5, o6) en un deuxième signal électrique initial (iel, ie2, ie3) ;
un deuxième circuit d'ajustement (131, 133, 230, 751, 753, 850), couplé au deuxième convertisseur photoélectrique (111, 113, 210), configuré pour retarder le deuxième signal électrique initial (iel, ie2, ie3) selon le motif de faisceau pour délivrer un deuxième signal électrique ajusté (aj1, aj2, aj3, aj4, aj5, aj6), dans lequel l'émetteur de formation de faisceau hybride optique et électrique (100, 200) est **caractérisé en ce que** le premier circuit d'ajustement (131, 133, 230, 751, 753, 850) et le deuxième circuit d'ajustement (131, 133, 230, 751, 753, 850) sont étalonnés à une phase initiale, et sont configurés pour appliquer un ajustement de phase ultérieure du premier signal électrique initial (iel, ie2, ie3) et du deuxième signal électrique initial (iel, ie2, ie3) en réponse à l'étalonnage à une phase initiale ; et
le réseau d'antennes (170, 270, 710, 810), comprenant :
une première antenne (171, 173, 711, 713), couplée au premier circuit d'ajustement (131, 133, 230, 751, 753, 850) ; et
une deuxième antenne (171, 173, 711, 713), couplée au deuxième circuit d'ajustement (131, 133, 230, 751, 753, 850), dans lequel le réseau d'antennes (170, 270, 710, 810) est configuré pour rayonner une onde électromagnétique selon le premier signal électrique ajusté (aj1, aj2, aj3, aj4, aj5, aj6) et le deuxième signal électrique ajusté (aj1, aj2, aj3, aj4, aj5, aj6).

2. Emetteur de formation de faisceau hybride optique et électrique (100, 200) selon la revendication 1, dans lequel
le premier circuit d'ajustement (131, 133, 230, 751, 753, 850) est en outre configuré pour ajuster une amplitude du premier signal électrique initial (iel, ie2, ie3) selon le motif de faisceau.

3. Emetteur de formation de faisceau hybride optique et électrique (100, 200) selon la revendication 1, comprenant en outre :
un amplificateur (150, 151, 153, 250, 731, 733, 830), couplé au premier circuit d'ajustement (131, 133, 230, 751, 753, 850) et à la première antenne (171, 173, 711, 713), configuré pour amplifier le premier signal électrique ajusté (aj1, aj2, aj3, aj4, aj5, aj6) pour délivrer un signal électrique amplifié (am1, am2, am3, am4, am5, am6), dans lequel la première antenne (171, 173, 711, 713) est configurée pour rayonner selon le signal électrique amplifié (am1, am2, am3, am4, am5, am6) .

4. Emetteur de formation de faisceau hybride optique et électrique (100, 200) selon la revendication 1, dans lequel une phase du premier signal électrique ajusté (aj1, aj2, aj3, aj4, aj5, aj6) et une phase du deuxième signal électrique ajusté (aj1, aj2, aj3, aj4, aj5, aj6) sont différentes.

5. Emetteur de formation de faisceau hybride optique et électrique (100, 200) selon la revendication 1, comprenant en outre :
un dispositif de commande (190, 290, 790, 890), couplé au premier circuit d'ajustement (131, 133, 230, 751, 753, 850) et au deuxième circuit d'ajustement (131, 133, 230, 751, 753, 850), configuré pour régler le motif de faisceau attendu formé par le réseau d'antennes (170, 270, 710, 810) et pour former une instruction d'ajustement (C1, C2, C3, C4) en conséquence, dans lequel
le premier circuit d'ajustement (131, 133, 230, 751, 753, 850) et le deuxième circuit d'ajustement (131, 133, 230, 751, 753, 850) sont configurés pour générer respectivement le premier signal électrique ajusté (aj1, aj2, aj3, aj4, aj5, aj6) et le deuxième signal électrique ajusté (aj1, aj2, aj3, aj4, aj5, aj6) selon l'instruction d'ajustement (C1, C2, C3, C4).

6. Emetteur de formation de faisceau hybride optique et électrique (100, 200) selon la revendication 1, comprenant en outre :
un dispositif de commande (190, 290, 790, 890), couplé au premier circuit d'ajustement (131, 133, 230, 751, 753, 850) et au deuxième circuit d'ajustement (131, 133, 230, 751, 753, 850), configuré pour régler la phase initiale et former une autre instruction d'ajustement (C1, C2, C3, C4) en conséquence, dans lequel
le premier circuit d'ajustement (131, 133, 230, 751, 753, 850) et le deuxième circuit d'ajustement (131, 133, 230, 751, 753, 850) sont étalonnés à la phase initiale selon l'autre instruction d'ajustement (C1, C2, C3, C4) .

7. Emetteur de formation de faisceau hybride optique et électrique (100, 200) selon la revendication 3, comprenant en outre :
un amplificateur de transimpédance (TIA) (220), couplé entre le premier convertisseur photoélectrique (111, 113, 210) et le premier circuit d'ajustement (131, 133, 230, 751, 753, 850), dans lequel le premier convertisseur photoélectrique (111, 113, 210), le TIA (220), le premier circuit d'ajustement (131, 133, 230, 751, 753, 850) et l'amplificateur (150, 151, 153, 250, 731, 733, 830) sont conditionnés ensemble.

8. Récepteur de formation de faisceau hybride optique et électrique (700, 800), comprenant :
un réseau d'antennes (170, 270, 710, 810), comprenant :
une première antenne (171, 173, 711, 713), configurée pour recevoir un premier signal électrique reçu (rel, re2, re3) ; et
une deuxième antenne (171, 173, 711, 713), configurée pour recevoir un deuxième signal électrique reçu (rel, re2, re3) ;
un premier circuit d'ajustement (131, 133, 230, 751, 753, 850), couplé à la première antenne (171, 173, 711, 713), configuré pour retarder le premier signal électrique reçu (rel, re2, re3) selon un motif de faisceau attendu formé par le réseau d'antennes (170, 270, 710, 810) pour délivrer un premier signal électrique ajusté (aj1, aj2, aj3, aj4, aj5, aj6) ;
un premier convertisseur électrique-optique (771, 773, 870), couplé au premier circuit d'ajustement (131, 133, 230, 751, 753, 850), configuré pour convertir le premier signal électrique ajusté (aj1, aj2, aj3, aj4, aj5, aj6) en un premier signal optique (L1, L2, L3, L4, L5) ;
un deuxième circuit d'ajustement (131, 133, 230, 751, 753, 850), couplé à la deuxième antenne (171, 173, 711, 713), configuré pour retarder le deuxième signal électrique reçu (rel, re2, re3) selon le motif de faisceau pour délivrer un deuxième signal électrique ajusté (aj1, aj2, aj3, aj4, aj5, aj6), dans lequel le récepteur de formation de faisceau hybride optique et électrique (700, 800) est **caractérisé en ce que** le premier circuit d'ajustement (131, 133, 230, 751, 753, 850) et le deuxième circuit d'ajustement (131, 133, 230, 751, 753, 850) sont étalonnés à une phase initiale et sont configurés pour appliquer un ajustement de phase ultérieure du premier signal électrique reçu (rel, re2, re3) et du deuxième signal électrique reçu (rel, re2, re3) en réponse à l'étalonnage à une phase initiale ; et
un deuxième convertisseur électrique-optique (771, 773, 870), couplé au deuxième circuit d'ajustement (131, 133, 230, 751, 753, 850), configuré pour convertir le deuxième signal électrique ajusté (aj1, aj2, aj3, aj4, aj5, aj6) en un deuxième signal optique (L1, L2, L3, L4, L5).

9. Récepteur de formation de faisceau hybride optique et électrique (700, 800) selon la revendication 8, dans lequel le premier circuit d'ajustement (131, 133, 230, 751, 753, 850) est en outre configuré pour ajuster une amplitude du premier signal électrique reçu (re1, re2, re3) selon le motif de faisceau.

10. Récepteur de formation de faisceau hybride optique et électrique (700, 800) selon la revendication 8, comprenant en outre :
un amplificateur (150, 151, 153, 250, 731, 733, 830), couplé à la première antenne (171, 173, 711, 713) et au premier circuit d'ajustement (131, 133, 230, 751, 753, 850), configuré pour amplifier le premier signal électrique reçu (rel, re2, re3) pour délivrer un signal électrique amplifié (am1, am2, am3, am4, am5, am6), dans lequel le premier circuit d'ajustement (131, 133, 230, 751, 753, 850) est configurée pour retarder le signal électrique amplifié (am1, am2, am3, am4, am5, am6).

11. Récepteur de formation de faisceau hybride optique et électrique (700, 800) selon la revendication 8, dans lequel une phase du premier signal électrique ajusté (aj1, aj2, aj3, aj4, aj5, aj6) et une phase du deuxième signal électrique ajusté (aj1, aj2, aj3, aj4, aj5, aj6) sont différentes.

12. Récepteur de formation de faisceau hybride optique et électrique (700, 800) selon la revendication 8, comprenant en outre :
un dispositif de commande (190, 290, 790, 890), couplé au premier circuit d'ajustement (131, 133, 230, 751, 753, 850) et au deuxième circuit d'ajustement (131, 133, 230, 751, 753, 850), configuré pour régler le motif de faisceau attendu formé par le réseau d'antennes (170, 270, 710, 810) et pour former une instruction d'ajustement (C1, C2, C3, C4) en conséquence, dans lequel
le premier circuit d'ajustement (131, 133, 230, 751, 753, 850) et le deuxième circuit d'ajustement (131, 133, 230, 751, 753, 850) sont configurés pour générer respectivement le premier signal électrique ajusté (aj1, aj2, aj3, aj4, aj5, aj6) et le deuxième signal électrique ajusté (aj1, aj2, aj3, aj4, aj5, aj6) selon l'instruction d'ajustement (C1, C2, C3, C4).

13. Récepteur de formation de faisceau hybride optique et électrique (700, 800) selon la revendication 9, comprenant en outre :
un dispositif de commande (190, 290, 790, 890), couplé au premier circuit d'ajustement (131, 133, 230, 751, 753, 850) et au deuxième circuit d'ajustement (131, 133, 230, 751, 753, 850), configuré pour régler la phase initiale et former une autre instruction d'ajustement (C1, C2, C3, C4) en conséquence, dans lequel
le premier circuit d'ajustement (131, 133, 230, 751, 753, 850) et le deuxième circuit d'ajustement (131, 133, 230, 751, 753, 850) sont étalonnés à la phase initiale selon l'autre instruction d'ajustement (C1, C2, C3, C4).

14. Procédé de traitement de signal de formation de faisceau hybride optique et électrique, adapté pour un émetteur (100, 200), comprenant :
la conversion d'un premier signal optique (o1, o2, o3, o4, o5, o6) et d'un deuxième signal optique (o1, o2, o3, o4, o5, o6) en respectivement un premier signal électrique initial (iel, ie2, ie3) et un deuxième signal électrique initial (iel, ie2, ie3) ;
le retard respectivement, par un premier circuit d'ajustement, du premier signal électrique initial (iel, ie2, ie3) et, par un deuxième circuit d'ajustement, du deuxième signal électrique initial (iel, ie2, ie3) selon un motif de faisceau attendu formé par un réseau d'antennes (170, 270, 710, 810) pour délivrer un premier signal électrique ajusté (aj1, aj2, aj3, aj4, aj5, aj6) et un deuxième signal électrique ajusté (aj1, aj2, aj3, aj4, aj5, aj6), dans lequel le procédé de traitement de signal de formation de faisceau hybride optique et électrique est **caractérisé en ce qu'**il comprend :
l'étalonnage des premier et deuxième circuits d'ajustement à une phase initiale ; et
l'application d'un ajustement de phase ultérieure du premier signal électrique initial (iel, ie2, ie3) et du deuxième signal électrique initial (iel, ie2, ie3) en réponse à l'étalonnage à une phase initiale ; et
le rayonnement d'une onde électromagnétique par l'intermédiaire du réseau d'antennes (170, 270, 710, 810) selon le premier signal électrique ajusté (aj1, aj2, aj3, aj4, aj5, aj6) et le deuxième signal électrique ajusté (aj1, aj2, aj3, aj4, aj5, aj6), dans lequel le réseau d'antennes (170, 270, 710, 810) comprend deux antennes (171, 173, 711, 713) correspondant respectivement au premier signal électrique ajusté (aj1, aj2, aj3, aj4, aj5, aj6) et au deuxième signal électrique ajusté (aj1, aj2, aj3, aj4, aj5, aj6).

15. Procédé de traitement de signal de formation de faisceau hybride optique et électrique, adapté pour un récepteur (700, 800), comprenant :
la réception d'un premier signal électrique reçu (rel, re2, re3) et d'un deuxième signal électrique reçu (rel, re2, re3) respectivement par l'intermédiaire de deux antennes (171, 173, 711, 713) d'un réseau d'antennes (170, 270, 710, 810) ;
le retard respectivement, par un premier circuit d'ajustement, du premier signal électrique reçu (rel, re2, re3) et, par un deuxième circuit d'ajustement, du deuxième signal électrique reçu (rel, re2, re3) selon un motif de faisceau attendu formé par le réseau d'antennes (170, 270, 710, 810) pour délivrer un premier signal électrique ajusté (aj1, aj2, aj3, aj4, aj5, aj6) et un deuxième signal électrique ajusté (aj1, aj2, aj3, aj4, aj5, aj6), dans lequel le procédé de traitement de signal de formation de faisceau hybride optique et électrique est **caractérisé en ce qu'**il comprend :
l'étalonnage des premier et deuxième circuits d'ajustement à une phase initiale ; et
l'application d'un ajustement de phase ultérieure du premier signal électrique reçu (rel, re2, re3) et du deuxième signal électrique reçu (rel, re2, re3) en réponse à l'étalonnage à une phase initiale ; et
la conversion du premier signal électrique ajusté (aj1, aj2, aj3, aj4, aj5, aj6) et du deuxième signal électrique ajusté (aj1, aj2, aj3, aj4, aj5, aj6) respectivement en un premier signal optique (L1, L2, L3, L4, L5) et un deuxième signal optique (L1, L2, L3, L4, L5).
